# EUROPEAN PATENT APPLICATION

(11) **EP 2 636 450 A1**
(43) Date of publication of application: **11.09.2013**
(21) Application number: 11838048.4
(22) Date of filing: 02.11.2011
(51) Int. Cl.: B01J 35/02, B05D 5/00, B32B 9/00, C09D 183/04

(54) **PHOTOCATALYST-COATED OBJECT AND PHOTOCATALYST COATING LIQUID FOR SAME**

(30) Priority: 02.11.2010 JP 2010246169
(71) Applicant: TOTO LTD., Kitakyushu-shi Fukuoka 802-8601 (JP)
(72) Inventor: HAYAKAWA, Makoto, Kitakyushu-shi Fukuoka 802-8601 (JP); FUJII, Hiroyuki, Kitakyushu-shi Fukuoka 802-8601 (JP); TAKAKI, Yoji, Kitakyushu-shi Fukuoka 802-8601 (JP)
(74) Representative: Grünecker, Kinkeldey, Stockmair & Schwanhäusser
(86) International application number: PCT/JP2011/075252
(87) International publication number: WO 2012/060398

(57) **Abstract**

There is provided a photocatalyst-coated body that is less likely to suffer from flow streak-derived appearance defects. Disclosed is a photocatalyst-coated body that excels in various properties, especially in a harmful gas decomposition capability and weathering resistance without sacrificing the design of a base, particularly while effectively preventing the corrosion of an organic base. The photocatalyst-coated body comprises: a base containing an organic component; and a transparent photocatalyst layer provided on the base, wherein the photocatlayst layer comprises, based on 100% by mass of the whole photocatalyst layer, photocatalyst particles being 1% by mass or more and 20% by mass or less , inorganic oxide particles being 50% by mass or more and less than 89% by mass, and a dried product of a silicone emulsion being more than 10% by mass and less than 50% by mass, and the silicone emulsion is formed of a silicone represented by an average composition formula: RₐSiO_{(4-a)/2} wherein R represents an alkyl or phenyl group; and 2 ≤ a < 4.

## Description

### [RELATED APPLICATION]

This application claims the benefit of priority from the prior Japanese Patent Application No. 246169/2010, filed on November 2, 2010, the entire contents of which are incorporated herein by reference.

### [TECHNICAL FIELD]

The present invention relates to a photocatalyst-coated body and a photocatalyst coating liquid for the formation of the same.

### [BACKGROUND ART]

Photocatalysts such as titanium oxide have recently used, for example, for buildings, structures, vehicles, and members and composite materials constituting them.

For use of photocatalysts in outdoors, photocatalysts have been attached to the surface of bases to impart the function of decomposing harmful substances such as NOx and SOx through photoenergy. Further, the surface of the layer which becomes hydrophilic by light irradiation has the function of allowing deposited contaminants to be washed away by rainfall, that is, has the so-called self-cleaning function.

For buildings, structures, vehicles, and members and composite materials constituting them, in many cases, design is to be imparted for use in living spaces. To this end, bases having an organic material surface, such as resin plates or sheets, wallpapers, coated plates or sheets, film laminated plates or sheets, and decorative plates or sheets, are mainly used as bases for these members, and these bases are colored to impart the design. Accordingly, the development of techniques that form a transparent photocatalyst film has been demanded from the viewpoint of maintaining the design imparted to the base.

In order to fix a photocatalyst film on a base, a technique is adopted in which photocatalyst particles are immobilized with a binder. For example, silicones, silica bound by hydrolysis and condensation of alkyl silicates, and fluororesins are extensively used as the binder component from the viewpoint of resistance to the photocatalytic decomposition function (for example, JP H07(1995)-171408A (PTL 1)).

When an environmental burden is taken into consideration, the use of water as a solvent for the photocatalyst coating liquid is suitable in forming a photocatalyst film. Silicone emulsions (JP 2001-64583A (PTL 2), JP 2004-51644A (PTL 3), JP 2004-149686A (PTL 4), and JP 2008-95069A (PTL 5)), fluororesin emulsions (JP 2004-51644A (PTL 3)), alkali silicates (pamphlet of WO 99/06300 (PTL 6)), and colloidal silica (JP H11(1999)-169727A (PTL 7)) are suitable as a binder component in the photocatalyst film formation.

Further, in recent years, some of the present inventions have proposed the formation of a photocatalyst film consisting essentially of a particulate material using silica particles as a binder, and the claimed advantage of this technique is good fixation and exerting of the function of decomposing harmful gases such as NOx (for example, JP 2008-264747A (PTL 8) and JP 2009-255571A (PTL 9)).

A technique has also been proposed that uses a silicone emulsion as a binder, maintains pores in the film by any method and exerts the function of decomposing harmful gases such as NOx (JP 2004-51644A (PTL 3), JP 2010-5613A (PTL 10), and JP 2010-36135A (PTL 11)).

JP 2004-51644A (PTL 3) discloses a photocatalytic coating agent comprising at least (a) photocatalytic oxide particles, (b) a hydrophobic resin emulsion, (c) water, (d) silica particles, and (e) a color pigment, wherein the mean particle diameter of the components (a) and (d) is smaller than the mean diameter of particles dispersed in the component (b), the proportion of the component (a) in the whole solid content is 1 to 5% by weight, the proportion of the component (d) incorporated is 10 to 90% by weight, and coating on the base allows the photocatalytic oxide particles and the silica particles to be moved upward to form a coating film having a thickness of 1 µm to 1 mm. Further, in this PTL, whiskers or fibers are used as an extender pigment to maintain pores.

JP 2010-5613A (PTL 10) discloses a filmy composite that has a structure comprising: (A) inorganic oxide particles constituting a continuous phase having pores; and (B) resin composition particles and (C) photocatalytically active metal oxide particles that are dispersed in the continuous phase, wherein the contents of the inorganic oxide particles (A), the resin composition particles (B), and the photocatalytically active metal oxide particles (C) are 35 to 75% by mass, 10 to 60% by mass, and 4 to 20% by mass, respectively. The resin composition particles (B) contain (B1) polymer emulsion particles obtained by polymerizing (s) a hydrolysable silicon compound and (m) a vinyl monomer in the presence of water and an emulsifier. The vinyl monomer (m) suitably contains (m1) a vinyl monomer containing secondary and/or tertiary amide groups. The composite is obtained by drying a coating liquid, from which the composite can be formed, at 70°C for 30 min. PTL 10 describes that, preferably, the vinyl monomer (m1) containing secondary and/or tertiary amide groups is polymerized together with (m2) another vinyl monomer copolymerizable therewith because properties of the resultant polymerization product (for example, glass transition temperature, molecular weight, hydrogen bonding force, polarity, dispersion stability, weathering resistance, and compatibility of the hydrolysable silicon compound (s) with the polymerization product) can be regulated. According to PTL 10, the proportion of components is important for the regulation of the porosity, and the contents of the inorganic oxide particles (A), the resin composition particles (B), and the photocatalytically active metal oxide particles (C) are 35 to 75% by mass, 10 to 60% by mass, and 4 to 20% by mass, respectively.

JP 2010-36135A (PTL 11) discloses a porous photocatalyst film obtained by forming a film using a solution containing photocatalytically active metal oxide particles and a film former, wherein the film former is a silicone emulsion including a silicone dispersed in an aqueous solvent, and the silicone contains a polymer obtained by polymerizing at least a siloxane having a specific structure and an acrylic acid derivative having a specific structure. According to PTL 11, preferably, the porous photocatalyst film is a film formed by drying or heating the solution. In a working example, drying is carried out in an air circulation thermostatic oven of 100°C for 10 min. The aqueous solvent that is a dispersant for the silicone emulsion is evaporated by drying or heating. The evaporation allows gaps among silicone particles to be gradually narrowed, leading to loss of flowability. When drying is further continued, water that stays in gaps among the particles is evaporated to form a porous film.

### [Citation List]

### [Patent Literature]

[PTL 1] JP H07(1995)-171408A
[PTL 2] JP 2001-64583A
[PTL 3] JP 2004-51644A
[PTL 4] JP 2004-149686A
[PTL 5] JP 2008-95069A
[PTL 6] WO 99/06300
[PTL 7] JP H11(1999)-169727A
[PTL 8] JP 2008-264747A
[PTL 9] JP 2009-255571A
[PTL 10] JP 2010-5613A
[PTL 11] JP 20110-36135A

### [SUMMARY OF THE INVENTION]

### [Technical Problem]

As described above, an aqueous coating liquid of a photocatalyst is known and is coated an an existing base on site, However, flow streak-shaped appearance defects sometimes occur on a photocatalyst layer during drying and aging of the photocatalyst layer after coating. The flow streak-shaped appearance defects are detrimental to the appearance and design of the photocatalyst layer, and, thus, the prevention of the flaw streak-shaped appearance defects has been desired.

Furthermore, what is required of photocatalyst-coated bodies, especially in photocatalyst-coated bodies used outdoors, is a high level of weathering resistance.

### [Solution to Problem]

The present inventors have now found that the flow streak-shaped appearance defects in coating on site are likely to occur when through-type pores large enough for a primer organic component to be diffused outward are present in the photocatalyst layer in a drying and aging process after the coating of the photocatalyst coating liquid for photocatalyst layer formation. The present inventors have also found that the occurrence of the flow streak-shaped appearance defects can be effectively prevented by combining photocatalyst particles, inorganic oxide particles, and a dried product of a specific silicone emulsion in a specific formulation. Further, the present inventors have confirmed that the use of a component containing a large amount of reaction-curable functional groups in the photocatalyst layer is not very effective for through-type pore filling purposes.

The present inventors have further unexpectedly found that a combination of photocatalyst particles, inorganic oxide particles, and a dried product of a specific silicone emulsion in a specific formulation significantly improves the weathering resistance of the photocatalyst-coated body. The present invention has been made based on such finding.

Accordingly, an object of the present invention is to provide a photocatalyst coating liquid that is less likely to cause the flow streak-shaped appearance defects. In a specific embodiment, an object of the present invention is to provide a photocatalyst-coated body that excels in various properties, especially in harmful gas decomposition capability and weathering resistance, and is less likely to cause flow streak-shaped appearance defects without sacrificing a design of a base, particularly while effectively preventing the corrosion of an organic base, and a photocatalyst coating liquid for photocatalyst-coated body formation on an existing base on site.

According to the present invention, there is provided a photocatalyst-coated body comprising: a base containing an organic component; and a transparent photocatalyst layer provided on the base, wherein the photocatlayst layer comprises, based on 100% by mass of the whole photocatalyst layer, photocatalyst particles being 1% by mass or more and 20% by mass or less, inorganic oxide particles being 30% by mass or more and less than 89% by mass, and a dried product of a silicone emulsion being more than 10% by mass and less than 50% by mass, and the silicone emulsion comprises a silicone represented by an average composition formula: RₐSiO_{(4-a)/2} where R represents an alkyl or phenyl group; and 2 ≤ a < 4.

According to another aspect of the present invention, there is provided a photocatalyst coating liquid for the formation of a coating film on a base by coating the photocatalyst coating liquid on a base containing an organic component and drying the coating at a temperature of less than 60°C, the photocatalyst coating liquid comprising: water; and, based on 100% by mass of the whole solid content of the photocatalyst coating liquid, photocatalyst particles being 1% by mass or more and 20% by mass or less, inorganic oxide particles being 30% by mass or more and less than 89% by mass, and a silicone emulsion being more than 10% by mass and less than 50% by mass, the silicone emulsion comprising a silicone represented by an average composition formula: RₐSiO_{(4-a)/2} where R represents an alkyl or phenyl group; and 2 ≤ a < 4.

### [EFFECT OF THE INVENTION]

The photocatalyst coating liquid of the present invention can form a photocatalyst layer that is less likely to have flow streak-shaped appearance defects. Further, in one specific embodiment of the present invention, the photocatalyst-coated body having a photocatalyst layer formed using the coating liquid according to the present invention excels in various properties, especially in harmful gas decomposition capability and weathering resistance, and is less likely to have flow streak-shaped appearance defects without sacrificing a design of a base, particularly while effectively preventing the corrosion of an organic base. Further, in a preferred embodiment of the present invention, a photocatalyst-coated body is provided that excels also in desired various film properties (such as film strength). Furthermore, the photocatalyst-coated body according to the present invention excels in weathering resistance.

### [MODE FOR CARRYING OUT THE INVENTION]

### Photocatalyst-coated body

According to one aspect of the present invention, there is provided a photocatalyst-coated body comprising: a base containing an organic component; and a transparent photocatalyst layer provided on the base, wherein the photocatlayst layer comprises, based on 100% by mass of the whole photocatalyst layer, photocatalyst particles being 1% by mass or more and less than 20% by mass, inorganic oxide particles being 30% by mass or more and less than 89% by mass, and a dried product of a silicone emulsion being 10% by mass or more and less than 50% by mass. Furhter, the silicone emulsion comprises a silicone represented by an average composition formula: RₐSiO_{(4-a)/2} where R represents an alkyl (preferably lower (C₁₋₆)alkyl, more preferably methyl or ethyl) or phenyl group; and 2 ≤ a < 4. In preferred embodiment of the present invention, the silicone emulsion has a glass transition temperature of above 60°C. In a preferred embodiment of the present invention, the photocatalyst-coated body according to the present invention is used under an atmosphere having a temperature of less than 60°C.

The above construction can render flow streak-shaped appearance defects less likely to occur while maintaining basic properties required of the photocatalyst-coated body. In a preferred embodiment of the present invention, the photocatalyst-coated body excels in various properties, especially in harmful gas decomposition capability and weathering resistance, and is less likely to cause flow streak-shaped appearance defects without sacrificing a design of a base, particularly while effectively preventing the corrosion of an organic base.

Although the reason why flow streak appearance defects are suppressed while maintaining basic properties required of photocatalyst-coated bodies has not been elucidated yet, it is believed to be as follows. However, it should be noted that the following description is hypothetical and the present invention is not limited thereby.

In the present invention, the photocatalyst layer comprises photocatalyst particles being 1% by mass or more and 20% by mass or less and inorganic oxide particles being 30% by mass or more and less than 89% by mass as indispensable components. Thus, pores are formed in the photocatalyst layer, and the harmful gas decomposition capability can be maintained or enhanced despite a relatively small proportion of the photocatalyst particles. Further, in the present invention, the content of the silicone emulsion having the above average composition formula is more than 10% by mass to less than 50% by mass, preferably more than 10% by mass to 30% by mass or less. In a drying and aging step after applying the photocatalyst coating liquid in a photocatalyst layer formation process, the silicone emulsion maintains the particulate shape and hardly undergoes melting of the particles that causes the intergranular pore portion to disappear. The particles will just deformed after the drying and aging step. Instead, only deformation occurs as a result of water removal. Consequently, pores effectively remain, and the harmful gas decomposing capability is maintained without a significant lowering as compared with the case where the emulsion is not added. When the emulsion is added, the pore diameter of the photocatalyst layer is reduced as compared with the case where the emulsion is not added.

According to the finding by the present inventors, one cause of flow streak-shaped appearance defects is considered as follows. Specifically, when water such as rain water or dew condensation water flows down, for example, from an edge on the uppermost portion of the base and joints, the water is diffused into the photocatalyst layer from the surface of the photocatalyst layer. Next, a component in a color layer or clear layer provided in the base or under the photocatalyst layer, especially an organic component, particularly an uncured component, is diffused into the photocatalyst layer and oozes out on the surface of the photocatalyst layer. When water is evaporated, the oozed component is immobilized on the surface of the photocatalyst layer, and the immobilization is considered causative of streak-shaped appearance defects. By contrast, in the present invention, the addition of the emulsion results in a reduced pore diameter of the photocatalyst layer, Consequently, the component from the underlying layer is less likely to be diffused into the photocatalyst layer, and, even when water such as rain water or dew condensation water flows down, for example, from an edge on the uppermost portion of the base and joints, the component from the underlying layer hardly oozes out on the surface of the photocatalyst layer and, consequently, appearance defects are less likely to occur.

In a preferred embodiment of the present invention, the silicone emulsion has a glass transition point in coating on site, where the ambient temperature is substantially below 60°C although it is high in summer, that is above the surface temperature of the base to be coated with the photocatalyst coating liquid and above the atmosphere temperature, that is, more than 60°C. When the glass transition temperature is in this glass transition point range, the above advantageous effect can be further attained.

### Base

The base according to the present invention is preferred as a base containing an organic component, especially as a base in which an uncured component is present or possibly present, or that an organic component is deteriorated or possibly deteriorated in use under an influence of ultraviolet light or the like to produce a low-molecular weight component.

In one embodiment of the present invention, the whole base is formed of an organic material, or alternatively, the base is formed of an inorganic material having a surface covered with an organic material (for example, a decorative sheet). Further, in addition to resins containing organic materials, for example, inorganic pigments or inorganic extender pigments may be added. The base may have on its surface a layer that contains an organic component and is resistant to corrosion by the photocatalyst. Furthermore, the base has a layer containing an organic component, for example, a pigmented layer.

Examples of bases that are preferred from the viewpoint of applications include building materials, exterior of buildings, window frames, window glass, structural members, exterior and coating of vehicles, exterior of mechanical devices or articles, dust covers and coating, traffic signs, various display devices, advertising pillars, sound insulation walls for roads, sound insulation walls for railways, bridges, exterior and coating of guard rails, interior and coating of tunnels, insulators, solar battery covers, heat collection covers for solar water heaters, PVC greenhouses, covers for vehicle illuminating lamps, outdoor lighting equipment, tables, and exterior materials for application onto the surface of the above articles, for example, films, sheets, and seals.

### Photocatalyst layer in photocatalyst-coated body

In one embodiment of the present invention, the photocatlayst layer comprises, based on 100% by mass of the whole photocatalyst layer, photocatalyst particles being 1% by mass or more and 20% by mass or less, inorganic oxide particles being 30% by mass or more and less than 89% by mass, and a dried product of a silicone emulsion being more than 10% by mass and less than 50% by mass wherein the silicone emulsion is formed of a silicone represented by the above average composition formula. In a more preferred embodiment, the following five formulations are possible for the photocatlayst layer.
(1) The photocatlayst layer comprises, based on 100% by mass of the whole photocatalyst layer, photocatalyst particles being 1% by mass or more and 20% by mass or less, inorganic oxide particles being 40% by mass or more and less than 89% by mass, and a dried product of the silicone emulsion being more than 10% by mass and 40% by mass or less.
(2) The photocatlayst layer comprises, based on 100% by mass of the whole photocatalyst layer, photocatalyst particles being 1% by mass or more and 20% by mass or less, inorganic oxide particles being 50% by mass or more and less than 89% by mass, and a dried product of the silicone emulsion being more than 10% by mass and 30% by mass or less.
(3) The photocatlayst layer comprises, based on 100% by mass of the whole photocatalyst layer, photocatalyst particles being 1% by mass or more and 15% by mass or less, inorganic oxide particles being 35% by mass or more and less than 89% by mass, and a dried product of the silicone emulsion being more than 10% by mass and less than 50% by mass.
(4) The photocatlayst layer comprises, based on 100% by mass of the whole photocatalyst layer, photocatalyst particles being 1% by mass or more and 15% by mass or less, inorganic oxide particles being 45% by mass or more and less than 89% by mass, and a dried product of the silicone emulsion being more than 10% by mass and 40% by mass or less.
(5) The photocatlayst layer comprises, based on 100% by mass of the whole photocatalyst layer, photocatalyst particles being 1% by mass or more and 15% by mass or less, inorganic oxide particles being 55% by mass or more and less than 89% by mass, and a dried product of the silicone emulsion being more than 10% by mass and 30% by mass or less.

In the present invention, the photocatalyst layer may be in a completely filmy state or alternatively may be in a partially filmy state, as long as photocatalyst particles are present on the surface of the base. Further, the photocatalyst layer may also be present as islands discretely distributed on the surface of the base. In a preferred embodiment of the present invention, the photocatalyst layer is obtained by applying a coating liquid.

The photocatalyst particles used in the present invention are not particularly limited as long as the particles are photocatalytically active. Preferred examples thereof include particles of metal oxides such as titanium oxide (TiO₂), ZnO, SnO₂, SrTiO₃, WO₃, Bi₂O₃, and Fe₂O₃. Titanium oxide particles are more preferred, and anatase titanium oxide particles are most preferred. Further, titanium oxide is advantageous in that bandgap energy is high and, accordingly, ultraviolet light is necessary for photoexcitation and visible light is not absorbed in the photoexcitation process, whereby color development of a complementary color component can be avoided. Titanium oxide is available in various forms such as powdery, sol, and solution forms. However, any form of titanium oxide that is photocatalytically active is usable.

In a preferred embodiment of the present invention, the mean particle diameter of the photocatalyst particles is preferably 10 nm to 100 nm, more preferably 10 nm to 60 nm. The mean particle diameter is calculated as a number mean value determined by measuring the length of any 100 particles present in a field of view under a scanning electron microscope at a magnification of 200,000 times. The particles are preferably spherical but may be substantially circular or elliptical. When the particles are substantially circular or elliptical, the approximate length of the particles is calculated as ((major axis + minor axis)/2).

The inorganic oxide particles used in the present invention are not particularly limited as long as the inorganic oxide particles, together with the photocatalyst particles, can form a layer. Preferred examples thereof include particles of single oxides such as silica, alumina, zirconia, ceria, yttria, boronia, magnesia, calcia, ferrite, amorphous form of titania, and hafnia; and particles of composite oxides such as barium titanate and calcium silicate. Silica particles are more preferred.

In a preferred embodiment of the present invention, the mean particle diameter of the inorganic oxide particles is preferably more than 5 nm to 100 nm or less, more preferably 10 nm to 50 nm. The mean particle diameter is calculated as a number mean value determined by measuring the length of any 100 particles present in a field of view under a scanning electron microscope at a magnification of 200,000 times. The particles are preferably spherical but may be substantially circular or elliptical. When the particles are substantially circular or elliptical, the approximate length of the particles is calculated as ((major axis + minor axis)/2).

The following explanation is hypothetical, and the present invention is not limited thereby. In drying at room temperature, the silicone emulsion according to the present invention maintains the particulate shape and does not cause fusing and even film formation. More specifically, in drying, the emulsion is deformed and forms an uneven film, and, thus, there is no possibility that the photocatalyst particles are fully covered with the emulsion component. Therefore, properties such as photocatalyst-derived gas decomposing capability and organic material decomposing capability are not significantly lost.

In the present invention, the silicone emulsion is formed of a silicone represented by an average composition formula: RₐSiO_{(4-a)/2} where R represents an alkyl (preferably lower (C1-6)alkyl, more preferably methyl or ethyl) or phenyl group; and 2 ≤ a < 4. In the emulsion comprising the silicone represented by the formula, a hardening reaction rarely occurs at R moieties, leading to an advantage that an effective decomposition performance for harmful gas is given and the flaw streak-shaped appearance defect is less likely to occur.

a = 2 in the average composition formula is an example of preferred silicone emulsions. Specifically, one group is preferably selected, for example, from methylphenylsilyl, dimethylsilyl, diethylsilyl, and ethylmethylsilyl groups. A silicone emulsion containing a methylphenylsilyl or dimethylsilyl group is more preferred.

Further, in a preferred embodiment of the present invention, the silicone emulsion has a glass transition point in coating on site, where the ambient temperature is substantially below 60°C although it is high in summer, that is above the surface temperature of the base to be coated with the photocatalyst coating liquid and above the atmosphere temperature, that is, above 60°C. When the glass transition temperature is in this glass transition point range, the above advantageous effect can be further attained.

Further, in the present invention, the addition of at least one metal or compound of metal selected from the group consisting of vanadium, iron, cobalt, nickel, palladium, zinc, ruthenium, rhodium, copper, silver, platinum, and gold can realize the development of higher levels of antimicrobial and antifungicidal properties. Preferably, the presence of the metal or the metal compound does not affect the formation of gaps among the particles, that is, the photocatalyst particles and the inorganic oxide particles. Accordingly, the addition amount may be very small, and the amount of the metal or the metal compound necessary for the development of the action thereof is very small. Specifically, the addition amount of the metal or the metal compound is preferably approximately 0.01 to 10% by mass, more preferably 0.05 to 5% by mass, based on the photocatalyst. Suitable metal compounds include, for example, gluconate, sulfate, malate, lactate, sulfate, nitrate, formate, acetate, and chelate of the above metals.

In the present invention, preferably, the photocatalyst layer has a thickness of 0.3 µm to 3 µm from viewpoint of simultaneously realizing photocatlaytic decomposition activity and transparency. The layer thickness is more preferably 0.3 µm to 1.5 µm, still more preferably 3.3 µm or more to less than 1.0 µm.

In a preferred embodiment of the present invention, the photocatalyst layer, when photoexcited, may be rendered hydrophilic and consequently have a self-cleaning function. The hydrophilicity level is preferably less than 20° in terms of contact angle between the surface of the coated body and water as measured after standing of the photocatalyst-coated body for 8 days in such a state that the photocatalyst-coated surface faces upward under irradiation of the surface of the photocatalyst layer with BLB light (having a line spectrum wavelength of 351 nm) adjusted to 1 mW/cm² In this embodiment, a self-cleaning function based on a high photocatalytically hydrophilic function can be exerted stably over a long period of time under weather conditions in low-latitude tropical and semitropical regions where the amount of ultraviolet light is large and the temperature and humidity are high.

### Photocatalyst coating liquid

The photocatalyst coating liquid according to another aspect of the present invention is adapted for the formation of the photocatalyst-coated body according to the present invention on an existing base on site and is used in such a manner that the photocatalyst coating liquid is coated on the base to form a coating which is then dried at a temperature of less than 60°C to form a coating film on the base. The photocatalyst coating liquid comprises: water; and, based on 100% by mass of the whole solid content of the photocatalyst coating liquid, photocatalyst particles being 1% by mass or more and 20% by mass or less, inorganic oxide particles being 50% by mass or more and less than 89% by mass, and a silicone emulsion being more than 10% by mass and 30% by mass or less.

Any photocatalyst particles that are photocatalytically active may be used as the photocatalyst particles in the present invention. Examples of preferred photocatalyst particles include particles of metal oxides such as titanium oxide (TiO₂), ZnO, SnO₂, SrTiO₃, WO₃, Bi₂O₃, and Fe₂O₃. Titanium oxide particles are more preferred, and anatase titanium oxide particles are most preferred. Further, titanium oxide is advantageous in that bandgap energy is high and, accordingly, ultraviolet light is necessary for photoexcitation and visible light is not absorbed in the photoexcitation process, whereby color development of a complementary color component can be avoided. Titanium oxide is available in various forms such as powdery, sol, and solution forms. Any form of titanium oxide that is photocatalytically active is usable.

In a preferred embodiment of the present invention, the mean particle diameter of the photocatalyst particles is preferably 10 nm to 100 nm, more preferably 10 nm to 60 nm. The mean particle diameter is calculated as a number mean value determined by measuring the length of any 100 particles present in a field of view under a scanning electron microscope at a magnification of 200,000 times. The particles are preferably spherical but may also be substantially circular or elliptical. When the particles are substantially circular or elliptical, the approximate length of the particles is calculated as ((major axis + minor axis)/2).

The inorganic oxide particles used in the present invention are not particularly limited as long as the inorganic oxide particles, together with the photocatalyst particles, can form a layer. Preferred examples thereof include particles of single oxides such as silica, alumina, zirconia, ceria, yttria, boronia, magnesia, calcia, ferrite, amorphous form of titania, and hafnia; and particles of composite oxides such as barium titanate and calcium silicate. Silica particles are more preferred.

In a preferred embodiment of the present invention, the mean particle diameter of the inorganic oxide particles is preferably more than 5 nm to 100 nm or less, more preferably 10 nm or more to 50 nm or less. The mean particle diameter is calculated as a number mean value determined by measuring the length of any 100 particles present in a field of view under a scanning electron microscope at a magnification of 200,000 times. The particles are most preferably spherical but may be substantially circular or elliptical. When the particles are substantially circular or elliptical, the approximate length of the particles is calculated as ((major axis + minor axis)/2).

The following explanation is hypothetical, and the present invention is not limited thereby. In drying at room temperature, the silicone emulsion according to the present invention maintains the particulate shape and does not cause fusing and even film formation. More specifically, in drying, the emulsion is deformed and forms an uneven film, and, thus, there is no possibility that the photocatalyst particles are fully covered with the emulsion component. Therefore, the gas decomposing capability and the organic material decomposing capability by the photocatalyst are not significantly lost.

In the present invention, the silicone emulsion is formed of a silicone represented by an average composition formula: RₐSiO_{(4-a)/2} where R represents an alkyl (preferably lower (C1-6)alkyl, more preferably methyl or ethyl) or phenyl group; and 2 ≤ a < 4. In the emulsion comprising the silicone represented by the formula, a hardening reaction rarely occurs at R moieties, leading to an advantage that an effective decomposition performance for harmful gas is given and the flow streak-shaped appearance defect is less likely to occur.

a = 2 in the average composition formula is an example of preferred silicone emulsions. Specifically, one group is preferably selected, for example, from methylphenylsilyl, dimethylsilyl, diethylsilyl, and ethylmethylsilyl groups. A silicone emulsion containing a methylphenylsilyl or dimethylsilyl group is more preferred.

Further, in a preferred embodiment of the present invention, the silicone emulsion has a glass transition point in coating on site, where the ambient temperature is substantially below 60°C although it is high in summer, that is above the surface temperature of the base to be coated with the photocatalyst coating liquid and above the atmosphere temperature, that is, more than 60°C. When the glass transition temperature is in this glass transition point range, the above advantageous effect can be further attained.

In the photocatalyst coating liquid according to the present invention, the addition of at least one metal or compound of metal selected from the group consisting of vanadium, iron, cobalt, nickel, palladium, zinc, ruthenium, rhodium, copper, silver, platinum, and gold can realize the development of higher levels of antimicrobial and antifungicidal properties. Preferably, the presence of the metal or the metal compound does not affect the formation of gaps among the particles, that is, the photocatalyst particles and the inorganic oxide particles. Accordingly, the addition amount may be very small, and the amount of the metal or the metal compound necessary for the development of the action thereof is very small. Specifically, the addition amount of the metal or the metal compound is preferably approximately 0.01 to 10% by mass, more preferably 0.05 to 5% by mass, based on the photocatalyst. Suitable metal compounds include, for example, gluconate, sulfate, malate, lactate, sulfate, nitrate, formate, acetate, and chelate of the above metals.

The coating liquid according to the present invention is obtained by dissolving or dispersing the above ingredients in a solvent. Preferably, water that is less likely to affect the environment is used as a main component in the solvent. In addition to water, alcohols, leveling agents, surfactants, viscosity modifiers and the like may be added in such an amount that the function and effect of the present invention are not sacrificed.

The solid content of the photocatalyst coating liquid according to the present invention is not particularly limited but is preferably 1 to 10% by mass from the viewpoint of easiness on coating. The photocatalyst coating composition can be analyzed to determine components in the coating composition by separating the coating liquid into a particulate component and a filtrate by ultrafiltration and analyzing the particulate component and the filtrate, for example, by infrared spectroscopy, gel permeation chromatography, and fluorescent X-ray spectroscopy, and analyzing the obtained spectra.

### Process for producing photocatalyst-coated body

The photocatalyst-coated body according to the present invention can be produced by coating the photocatalyst coating liquid according to the present invention on a base. Any coating method that can coat the coating liquid on existing bases on site may be used, and examples thereof include commonly extensively used methods such as brush coating, bar coating, roll coating, spray coating, flow coating, squeeze coating, and pad coating. After coating of the coating liquid on the base, the coating is dried at ordinary temperatures below 60°C.

### [EXAMPLES]

The present invention is further illustrated by Examples that are not intended as a limitation of the invention.

In the following Examples, various properties were measured by the following methods.

### Layer thickness:

The layer thickness of a polished cross section was measured under a scanning electron microscope S-4100 manufactured by Hitachi, Ltd.

### Contact angle with water:

The contact angle after outdoor exposure for one month was measured with a contact angle goniometer CA-X150 manufactured by Kyowa Interface Science Co., Ltd.

### NOx decomposition:

NOx decomposition was examined by a testing method specified in JIS (Japanese Industrial Standards) R 1701-1 "Test method for air purification performance of photocatalytic materials -- Part 1: Removal of nitric oxide."

### Flow streak test:

A photocatalyst-coated body was prepared and aged at room temperature for 12 hr, and 2 ml of ion-exchanged water was allowed to flow on the photocatalyst-coated body. Thereafter, the photocatalyst-coated body was aged at room temperature for one day and was then observed for whether or not flow streak-shaped appearance defects occurred on the coating film.

### Weathering resistance test 1:

A procedure consisting of immersing a test piece in a warm water of 60°C for 8 hr, then drying the test piece at 100°C for one hr, and then exposing the test piece to a bactericidal lamp of 0.3 mW for 15 hr was regarded as one cycle and was repeated by 3 to 8 cycles. A color difference ΔL between before the cycle test and after the cycle test was measured with a ZE2000 color difference meter manufactured by Nippon Denshoku Co., Ltd.

### Weathering resistance test 2:

Outdoor exposure was carried out at Miyako Island, Okinawa Prefecture in such a manner that a test piece was placed so as to face the south direction at an angle of 20° of the test piece that makes with the horizontal direction using an exposure mount specified in JIS K 5600-7-6. The test piece was taken out 5 month after the start of the test. A color difference ΔL between before the cycle test and after the cycle test was measured with a ZE2000 color difference meter manufactured by Nippon Denshoku Co., Ltd.

### Example 1

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 70 parts by mass of silica particles, and 20 parts by mass (on a solid content basis) of a silicon emulsion containing a methylphenylsilyl group and having a glass transition temperature of more than 60°C. An epoxy primer was coated on a glass base by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was good and 0.96 µmol, and, in a flow streak test, flow streak-shaped appearance defects were not observed on the next day.

### Example 2

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 70 parts by mass of silica particles, and 20 parts by mass (on a solid content basis) of a silicon emulsion containing a dimethylsilyl group and having a glass transition point above 60°C. An epoxy primer was coated on a glass base by air spraying and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount not decomposed by the photocatalyst-coated body was good and 0.93 µmol, and, in a flow streak test, flow streak-shaped appearance defects were not observed on the next day.

### Example 3

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 60 parts by mass of silica particles, and 30 parts by mass (on a solid content basis) of a silicon emulsion containing a methylphenylsilyl group and having a glass transition point above 60°C. An epoxy primer was coated on a glass base by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was good and 075 µmol, and, in a flow streak test, flow streak-shaped appearance defects were not observed on the next day.

### Example 4

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 60 parts by mass of silica particles, and 30 parts by mass (on a solid content basis) of a silicon emulsion containing a dimethylsilyl group and having a glass transition point above 60°C. An epoxy primer was coated on a glass base by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was good and 0.79 µmol, and, in a flow streak test, flow streak-shaped appearance defects were not observed on the next day.

### Example 5 (Comparative Example)

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 80 parts by mass of silica particles, and 10 parts by mass (on a solid content basis) of a silicon emulsion containing a methylphenylsilyl group and having a glass transition point above 60°C. An epoxy primer was coated on a glass base by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was good and 1.02 µmol. In a flow streak test, however, flow streak-shaped appearance defects were observed on the next day.

### Example 6 (Comparative Example)

### (Preparation of photocatalyst-coated body)

A photocatalytic aqueous coating liquid having a solid content of 5.5% by mass was prepared by mixing 10 parts by mass on anatase titanium oxide particles (mean crystallite diameter 10 nm), 80 parts by mass of silica particles, and 10 parts by mass (on a solid content basis) of a silicon emulsion containing a dimethylsilyl group and having a glass transition point above 60°C. An epoxy primer was coated on a glass subsgtrate by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was good and 0.96 µmol. In a flow streak test, however, flow streak-shaped appearance defects were observed on the next day.

### Example 7 (Comparative Example)

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 40 parts by mass of silica particles, and 50 parts by mass (on a solid content basis) of a silicon emulsion having a glass transition point above 60°C. An epoxy primer was coated on a glass substrate by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was as small as 0.42 µmol. In a flow streak test, flow streak-shaped appearance defects were not observed on the next day.

### Example 8 (Comparative Example)

### (Preparation of photocatalyst-coated body)

A photocatalytic aqueous coating liquid having a solid content of 5.5% by mass was prepared by mixing 10 parts by mass of anatase titanium oxide particles (mean crystallite diameter 10 nm), 60 parts by mass of silica particles, and 30 parts by mass (on a solid content basis) of an acrylic emulsion having a glass transition point not above 60°C. An epoxy primer was coated on a glass substrate on a glass substrate by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm. The amount of NOx decomposed by the photocatalyst-coated body was as small as 0.10 µmol. In a flow streak test, flow streak-shaped appearance defects were observed on the next day.

### Example 9 (Comparative Example)

### (Preparation of photocatalyst-coated body)

A photocatalytic aqueous coating liquid was having a solid content of 5.5% by mass prepared by mixin g 10 parts by mass of anatase titanium oxide particles (mean crystallite diameter 10 nm) and 90 parts by mass of silica particles. An epoxy primer was coated on a glass substrate by air spraying, and a colored layer composed of a silicone modified acrylic resin and a pigment was then coated. Further, the coating liquid was coated on the colored layer, and the coating was dried at room temperature to obtain a photocatalyst-coated body having a photocatalyst layer.

### (Evaluation of photocatalyst-coated body)

The cross section of the photocatalyst layer in the photocatalyst-coated body thus obtained was observed. As a result, the layer thickness was about 1 µm.

The results on the composition, layer thickness, contact angle with water, NOx decomposition, and the flow streak test are summarized in Tables 1 and 2 below, The results on weathering resistance tests 1 and 2 were as shown in Tables 3 and 4.

**[Table 1]**

| | Example 1 | Example 2 | Example 3 | Example 4 |
|---|---|---|---|---|
| TiO₂ | 10 | 10 | 10 | 10 |
| SiO₂ | 70 | 70 | 60 | 60 |
| Emulsion | 20 | 20 | 30 | 30 |
| Resin component in emulsion | Silicone | Silicone | Silicone | Silicone |
| Layer thickness (µm) | 1.0 | 1.0 | 1.0 | 1.0 |
| Contact angle with water (°) | 0 | 0 | 0 | 0 |
| Amount of decomposition of NOx (µmol) | 0.96 | 0.93 | 0.75 | 0.79 |
| Flow streak-shaped appearance defect | Absent | Absent | Absent | Absent |

**[Table 2]**

| | Example 5 | Example 6 | Example 7 | Example 8 |
|---|---|---|---|---|
| TiO₂ | 10 | 10 | 10 | 10 |
| SiO₂ | 80 | 80 | 40 | 60 |
| Emulsion | 10 | 10 | 50 | 30 |
| Resin component in emulsion | Silicone | Silicone | Silicone | Acrylic |
| Layer thickness (µm) | 1.0 | 1.0 | 1.0 | 1.0 |
| Contact angle with water (°) | 0 | 0 | 45 | 0 |
| Amount of decomposition of NOx (µmol) | 1.02 | 0.96 | 0.42 | 0.10 |
| Flow streak-shaped appearance defect | Present | Present | Absent | Present |

**[Table 3]**

| | Number of cycles and ΔL value | | |
|---|---|---|---|
| | 3 | 5 | 8 |
| Example 1 | 0.9 | 1.9 | 2.6 |
| Example 9 | 1.4 | 3.7 | 4.0 |

**[Table 4]**

| | ΔL value |
|---|---|
| Example 1 | 4.2 |
| Example 9 | 5.8 |

## Claims

1. A photocatalyst-coated body comprising: a base containing an organic component; and a transparent photocatalyst layer provided on the base, wherein
the photocatlayst layer comprises, based on 100% by mass of the whole photocatalyst layer,
photocatalyst particles being 1% by mass or more and 20% by mass or less ,
inorganic oxide particles being 30% by mass or more and less than 89% by mass, and
a dried product of a silicone emulsion being more than 10% by mass and less than 50% by mass, and
the silicone emulsion comprises a silicone represented by an average composition formula: RₐSiO_{(4-a)/2} where R represents an alkyl or phenyl group; and 2 ≤ a < 4.

2. The photocatalyst-coated body according to claims 1, wherein the silicone emulsion has a glass transition temperature of above 60°C.

3. The photocatalyst-coated body according to claim 1 or 2, wherein the photocatalyst particles are titanium oxide particles.

4. The photocatalyst-coated body according to any one of claims 1 to 3, wherein the inorganic oxide particles are silica particles.

5. The photocatalyst-coated body according to any one of claims 1 to 4, wherein the photocatalyst particles have a number mean particle diameter of 10 nm to 100 nm as determined by measuring the length of any 100 particles present in a field of view under a scanning electron microscope at a magnification of 200,000 times.

6. The photocatalyst-coated body according to any one of claims 1 to 5, wherein the inorganic oxide particles have a number mean particle diameter of 5 nm to 50 nm as determined by measuring the length of any 100 particles present in a field of view under a scanning electron microscope at a magnification of 200,000 times.

7. The photocatalyst-coated body according to any one of claims 1 to 6 for use as an exterior material.

8. A photocatalyst coating liquid for forming a coating film on a base by coating the photocatalyst coating liquid on a base containing an organic component and drying the coating at a temperature of less than 60°C, the photocatalyst coating liquid comprising:
water; and
based on 100% by mass of the whole solid content of the photocatalyst coating liquid,
photocatalyst particles being 1% by mass or more and 20% by mass or less,
inorganic oxide particles being 30% by mass or more and less than 89% by mass, and
a silicone emulsion being more than 10% by mass and less than 50% by mass,
the silicone emulsion being formed of a silicone represented by an average composition formula: RₐSiO_{(4-a)/2} where R represents an alkyl or phenyl group; and 2 ≤ a < 4.

9. The photocatalyst coating liquid according to claim 8, wherein the silicone emulsion has a glass transition temperature of above 60°C.

10. The photocatalyst coating liquid according to claim 8 or 9, wherein the solid content by mass of the photocatalyst coating liquid is 1% by mass or more to 10% by mass or less.

11. The photocatalyst coating liquid according to any one of claims 8 to 10, wherein the photocatalyst particles are titanium oxide particles.

12. The photocatalyst coating liquid according to any one of claims 8 to 11, wherein the inorganic oxide particles are silica particles.

13. The photocatalyst coating liquid according to any one of claims 8 to 12, wherein the photocatalyst particles have a number mean particle diameter of 10 nm to 100 nm as determined by measuring the length of any 100 particles present in a field of view under a scanning electron microscope at a magnification of 200,000 times.

14. The photocatalyst coating liquid according to any one of claim 8 to 13, wherein the inorganic oxide particles have a number mean particle diameter of more than 5 nmto 100 nm or less as determined by measuring the length of any 100 particles present in a field of view under a scanning electron microscope at a magnification of 200,000 times.

15. A method for manufacturing a photocatalyst-coated body according to any one of claims 1 to 7, the method comprising:
coating a photocatalyst coating liquid according to any one of claims 8 to 14 on a base containing an organic component; and drying the coating at a temperature of less than 60°C.
